Europäisches Patentamt

European Patent Office

Office européen des brevets

(19)

(11) Numéro de publication: **0 321 355**
A1

(12) **DEMANDE DE BREVET EUROPEEN**

(21) Numéro de dépôt: 88403218.6

(22) Date de dépôt: 16.12.88

(51) Int. Cl.⁴: **F 16 B 7/04**
H 02 G 9/00, H 02 G 1/10

(30) Priorité: 18.12.87 FR 8717759
30.03.88 FR 8804191

(43) Date de publication de la demande:
21.06.89 Bulletin 89/25

(84) Etats contractants désignés:
BE DE ES FR GB GR IT NL SE

(71) Demandeur: BERTIN & CIE
Zone Industrielle Boîte postale 3
F-78373 Plaisir Cédex (FR)

(72) Inventeur: De Goncourt, Louis
6 Rue Nungesser
F-78960 Voisins-le-Bretonneux (FR)

(74) Mandataire: Ramey, Daniel et al
Cabinet Ores 6 Avenue de Messine
F-75008 Paris (FR)

(54) Dispositif de liaison entre deux éléments longilignes parallèles, l'un porteur et l'autre porté, tels par exemple que des câbles.

(57) L'invention concerne un dispositif de liaison entre deux éléments longilignes, tels que deux câbles parallèles, comprenant un ressort (10) monté sur les deux mors (14) d'une pince (12) appliqués l'un contre l'autre et comprenant des rainures semi-cylindriques (20,22) de réception des éléments.

Par poussée du ressort (10) sur la pince (12), on provoque la fermeture de la pince et le maintien du dispositif sur les deux éléments.

L'invention s'applique notamment au support des câbles de transport d'énergie électrique.

FIG.2

EP 0 321 355 A1

## Description

## DISPOSITIF DE LIAISON ENTRE DEUX ELEMENTS LONGILIGNES PARALLELES, L'UN PORTEUR ET L'AUTRE PORTE, TELS PAR EXEMPLE QUE DES CABLES

L'invention concerne un dispositif de liaison entre deux éléments longilignes parallèles, l'un porteur et l'autre porté, tels par exemple que des câbles sous-marins, des conduites, etc.

Les câbles de transport d'énergie électrique n'ont pas, en général, une résistance mécanique leur permettant de supporter leur propre poids et doivent donc être reliés à un support, qui est par exemple un câble porteur en acier, en particulier lorsque le câble électrique est un câble sous-marin.

De tels câbles sont posés au moyen d'un navire de surface, qui avance à vitesse faible et qui mouille derrière lui le câble porteur et le câble électrique. Pour faciliter leur stockage, les deux câbles ne sont reliés l'un à l'autre qu'au moment où ils vont être mouillés. Il faut donc, sur le navire de pose, pouvoir monter sur les deux câbles, à intervalles réguliers, un dispositif de liaison qui transmette au câble porteur tous les efforts supportés par le câble électrique (les efforts de tension lors de la pose et son propre poids). Ces dispositifs de liaison entre les deux câbles doivent être simples, extrêmement fiables et à montage rapide et automatique, ce qui élimine tous les systèmes de support ou d'accrochage comprenant des éléments vissés.

L'invention a précisément pour but d'apporter une solution simple, fiable et économique à ce problème.

Elle propose à cet effet un dispositif de liaison entre deux éléments longilignes parallèles, l'un porteur et l'autre porté, tels par exemple que des câbles sous-marins, caractérisé en ce qu'il comprend :
- une pince à deux mors de serrage comprenant des moyens de montage sur un premier des éléments et des moyens de blocage sur le second élément,
- un moyen élastique mobile de serrage des mors par emboîtement sur la pince,
- et des moyens immobilisant les mors en translation sur le premier élément.

Ainsi, le second élément est relié au premier élément, par exemple un câble porteur en acier, par une pince solidaire par serrage du second élément et montée sur le câble porteur, en étant immobilisée en translation sur celui-ci par tout moyen approprié. On évite ainsi tout risque de frottement du dispositif de liaison sur le second élément, lorsque celui-ci est un câble électrique, à enveloppe relativement fragile.

Selon une autre caractéristique de l'invention, le moyen de serrage est un ressort à section en U, dont les branches sensiblement parallèles s'appuient sur les deux mors de la pince et sont déplaçables en translation sur ces mors.

Avantageusement, les deux mors de serrage sont sensiblement identiques parallèles, maintenus en appui l'un sur l'autre par le moyen élastique de serrage, et déplaçables par basculement entre une position d'ouverture où ils peuvent être engagés sur les éléments et dégagés de ces derniers, et une position de fermeture où ils sont bloqués au moins sur le second élément.

De préférence, les faces en regard des deux mors de la pince forment chacune un dièdre ayant un angle au sommet obtus.

Il suffit alors de déplacer le ressort de serrage sur les mors de la pince de part et d'autre du sommet des dièdres, pour obtenir le basculement des bras de la pince entre les deux positions précitées.

Selon encore une autre caractéristique de l'invention, le ressort est caractérisé par une raideur relativement faible. Ainsi, la force de serrage qu'il développe et transmet aux mors de la pince varie peu en fonction des variations de diamètre du second élément.

Avantageusement, le ressort est réalisé en matériau composite à fibres sensiblement unidirectionnelles. Le ressort présente alors l'avantage d'être léger, électriquement isolant et à peu près insensible à la corrosion.

Selon encore une autre caractéristique de l'invention, les deux mors de la pince comprennent une fente de logement d'une butée montée fixement sur le premier élément.

Selon les modes de réalisation, cette butée peut être solidarisée du premier élément avant que le dispositif de liaison selon l'invention soit monté sur les deux éléments, ou bien peut faire partie du dispositif de liaison et être fixée sur le premier élément lorsque le dispositif de liaison est monté sur les deux éléments.

L'invention sera mieux comprise et d'autres détails, caractéristiques et avantages de celle-ci apparaîtront à la lecture de la description explicative qui suit, faite à titre d'exemple en référence aux dessins annexés dans lesquels :

la figure 1 représente schématiquement un dispositif de liaison selon l'invention, en position d'ouverture ;

la figure 2 représente ce dispositif engagé sur deux câbles ;

la figure 3 représente ce dispositif monté sur les deux câbles ;

la figure 4 est une vue de côté, à plus grande échelle, du ressort faisant partie de ce dispositif ;

la figure 5 est une demi-vue en coupe du ressort ;

la figure 6 est une vue de côté d'un des mors de la pince du dispositif selon l'invention ;

la figure 7 est une vue de dessus de ce mors ;

la figure 8 est une vue de côté d'une butée destinée à être fixée sur un premier câble ;

la figure 9 représente cette butée montée dans la pince du dispositif selon l'invention, en position d'ouverture ;

la figure 10 représente le dispositif et la butée montés sur les deux câbles ;

les figures 11 et 12 sont des vues de côté et de dessus d'une variante de réalisation du dispositif, représenté ouvert ;

les figures 13 et 14 sont des vues correspondantes, mais représentant ce dispositif monté.

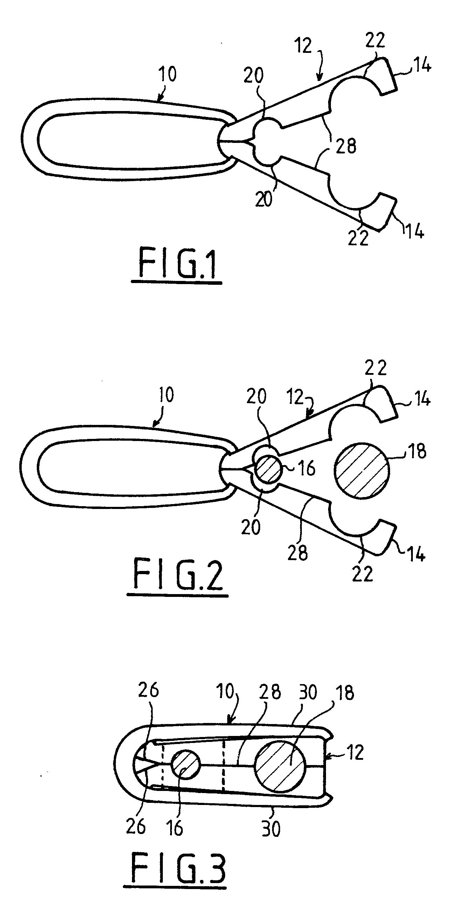

On se réfère d'abord aux figures 1 à 7, représentant une première forme de réalisation du dispositif selon l'invention.

Ce dispositif comprend (fig. 1 à 3) un ressort 10 et une pince 12 constitués de deux mors de serrage identiques 14 posés l'un sur l'autre. Dans la position des figures 1 et 2, la pince 12 est ouverte et prête à être serrée sur deux éléments longilignes 16, 18 tels par exemple qu'un câble porteur 16 en acier et un câble 18 de transport d'énergie électrique.

Les mors 14 de la pince comprennent, sur leurs faces en regard, deux rainures semi-cylindriques 20, 22 de réception des câbles 16, 18 respectivement. Ces faces en regard sont chacune en forme de dièdre à angle au sommet obtus, par exemple de l'ordre de 160°. L'arête 24 de sommet du dièdre se trouve au voisinage d'une extrémité du mors 14, par exemple du côté de la rainure semi-cylindrique 20 de plus faible diamètre, de telle sorte que, lorsque les petites faces 26 des dièdres sont appliquées l'une sur l'autre, la pince 12 est en position ouverte (fig. 1 et 2) et, quand les deux grandes faces 28 des dièdres sont appliquées l'une sur l'autre, la pince est en position fermée (fig. 3).

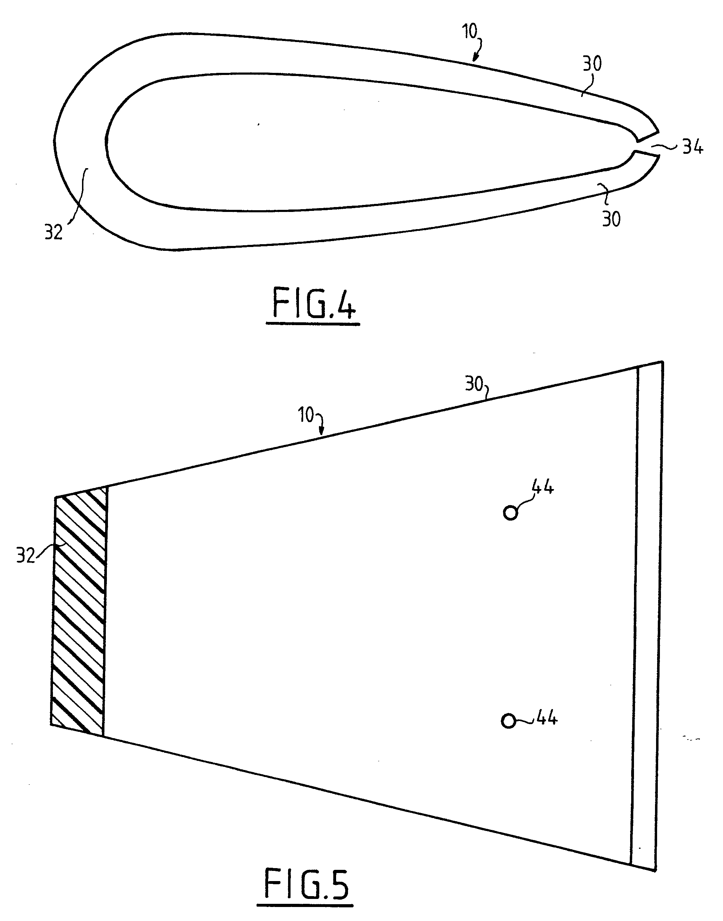

Le ressort 10, qui est mieux visible dans les figures 4 et 5, est réalisé en matériau composite et comprend deux branches identiques 30 raccordées entre elles par une partie incurvée 32 en arc de cercle. Les branches 30 du ressort sont relativement plates et ont une dimension en largeur (parallèlement à la direction des câbles 16, 18) plus importante à leur extrémité libre que dans leur zone de raccordement à la partie incurvée 32, tandis que l'épaisseur des branches varie en sens inverse, en étant plus importante dans la zone de raccordement à la partie incurvée 32. On obtient ainsi un ressort en U à raideur relativement faible, développant une force de serrage importante entre les extrémités libres de ses deux branches 30, mais qui varie peu en fonction de la distance entre ces extrémités libres.

Le ressort 30 est de préférence en matériau composite fibres de verre-résine, à fibres de verre unidirectionnelles qui sont par exemple bobinées sur un support à la forme de la surface interne à donner au ressort 10. Après bobinage et polymérisation de la résine, il suffit de couper le produit obtenu dans la zone désignée par la référence 34 en figure 4. D'autres modes de fabrication sont possibles.

La longueur des branches 30 du ressort 10 est déterminée de façon à ce que le ressort puisse être emboîté sur la pince 12, comme représenté en figure 3, pour maintenir celle-ci en butée à ses extrémités opposées, respectivement sur l'extrémité libre incurvée des branches 30 et sur la surface interne de la partie incurvée 32.

Chaque mors 14 de la pince 12 comprend, sur sa face extérieure, une nervure transversale 36 au niveau de la petite face 26 du dièdre précité, et qui est raccordée à cette petite face 26 par un arrondi 38 dont le rayon de courbure correspond sensiblement à celui de la surface interne de la partie incurvée 32 du ressort. A son extrémité opposée, la face extérieure du mors 14 de la pince comporte un arrondi 40, dont le rayon de courbure correspond sensiblement à celui de la surface interne de l'extrémité libre des branches 30 du ressort 10.

Par ailleurs, chaque mors 14 de la pince comporte une fente ou découpe rectangulaire 42 de réception d'une butée solidaire du câble porteur 16, comme on le verra par la suite.

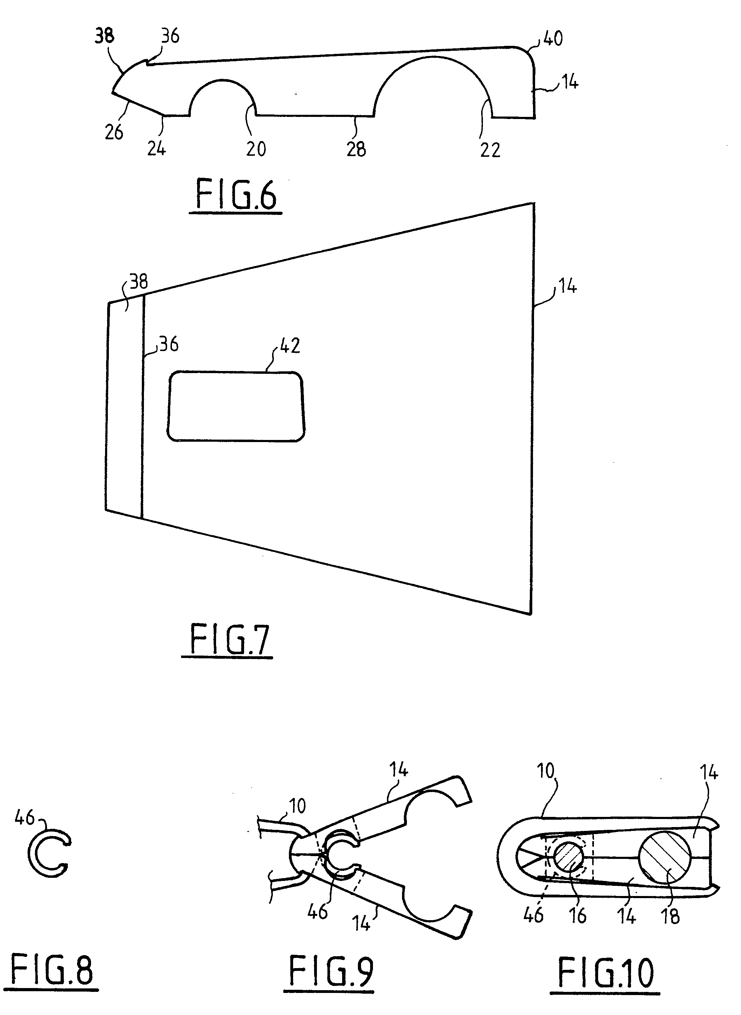

Comme les branches 30 du ressort 10, les mors 14 de la pince ont une forme sensiblement trapézoïdale (figure 7), ce qui permet d'exercer une force de serrage importante sur le câble électrique 18 tout en appliquant à l'enveloppe extérieure de ce dernier une pression de serrage relativement modérée.

Ce dispositif de liaison des câbles 16, 18 est utilisé de la façon suivante :

tout d'abord, les deux mors 14 de la pince 12 sont appliqués l'un sur l'autre, puis les extrémités libres des branches 30 du ressort 10 sont écartées l'une de l'autre et engagées sur les extrémités des mors 14 de la pince, jusqu'à venir se bloquer sur la nervure 36 comme représenté en figure 1. Dans cette position, les petites faces 26 des mors 14 sont appliquées l'une sur l'autre et la pince est ouverte.

L'ensemble ressort-pince peut être engagé sur les deux câbles 16, 18 maintenus parallèles, jusqu'à ce que les rainures semi-cylindriques 20, 22 des mors 14 de la pince soient au niveau des câbles 16, 18 respectivement.

Il suffit ensuite de pousser le ressort 10 sur les mors 14 de la pince, pour arriver dans la position représentée en figure 3, où la pince est serrée sur le câble 18 et montée libre à rotation sur le câble porteur 16 (les rainures 20, 22 étant dimensionnées à cet effet).

On remarquera que la force de serrage développée par les branches 30 du ressort 10 s'exerce sur les mors 14 de la pince essentiellement au niveau du câble 18, et qu'il existe, au niveau du câble 16, un espace libre entre les faces intérieures des branches 30 et les faces extérieures des mors 14.

Inversement, pour démonter ce dispositif de liaison, il suffit d'écarter l'une de l'autre les branches 30 du ressort 10 et de faire glisser ce dernier sur la pince 12 jusqu'à dans la position représentée en figures 1 et 2.

Pour que les branches 30 du ressort 10 puissent être écartées l'une de l'autre facilement, on peut former dans chaque branche deux trous 44, comme représenté en figure 5, qui sont destinés à recevoir les griffes d'un outil d'ouverture.

Comme le dispositif de liaison selon l'invention est monté libre à rotation sur le câble porteur 16, il est nécessaire de l'immobiliser en translation sur ce câble pour que la transmission des efforts du câble électrique 18 au câble porteur 16 puisse être assurée par le dispositif de liaison. Pour cela, lorsqu'un dispositif de liaison a été posé sur les câbles 16, 18, on peut fixer sur le câble 16 deux butées de part et d'autre de la pince.

On peut également, avant le montage du dispositif, fixer une butée sur le câble 16, qui viendra se loger dans les découpes 42 des bras 14 de la pince, puis engager le dispositif de liaison sur les câbles 16, 18, exactement au niveau de cette butée.

Selon encore une autre variante, représentée schématiquement dans les figures 8 à 10, la butée 46 est un ressort à raideur importante, en forme de C, pour être engagée à force et bloquée sur le câble porteur 16.

La butée 46 est d'abord placée dans les fentes ou découpes 42 des mors 14 de la pince maintenue en position ouverte par le ressort 10, puis l'ensemble est engagé sur les câbles 16, 18.

On pousse d'abord l'ensemble pour engager et fixer la butée 42 sur le câble 16, puis on pousse le ressort 10 sur les mors 14 de la pince, pour la refermer sur les câbles 16, 18. La pince 12 est libre de tourner autour de la butée 46 solidarisée du câble 16.

Selon une autre variante, la butée montée sur le câble peut avoir une surface extérieure biconique, et la rainure 20 de chaque bras de la pince peut avoir une forme correspondante, ce qui solidarise la pince et la butée au serrage de la pince.

De façon générale, l'invention permet un montage aisé, rapide et automatique d'un dispositif de liaison sur deux éléments longilignes parallèles, et trouve une application particulièrement avantageuse dans le mouillage des câbles électriques sous-marins. On remarquera également, que, dans la position de serrage, les deux faces extérieures des branches 30 du ressort 10 sont sensiblement planes et parallèles, ce qui n'introduit pas de contrainte supplémentaire dans le câble électrique ou dans le câble porteur lorsque les deux câbles reliés par les dispositifs de liaison passent sur une poulie immédiatement avant leur mouillage.

A titre d'exemple, on précisera qu'un dispositif selon l'invention peut résister à des forces de traction axiale et radiale supérieures à 400kgf quand il est monté sur un câble électrique d'un diamètre de 70 mm, la force de serrage du dispositif sur ce câble pouvant être de l'ordre de 1000 kgf.

Les mors 14 de la pince sont en matière plastique, par exemple polyamide ou résine chargée. Les surfaces internes des rainures 20, 22 peuvent être striées, nervurées ou aménagées pour augmenter le contact avec l'un et/ou l'autre des câbles 16, 18.

Le ressort 10 en matériau composite peut être renforcé, dans sa partie incurvée 32, par une âme plus épaisse ou par des fibres de carbone.

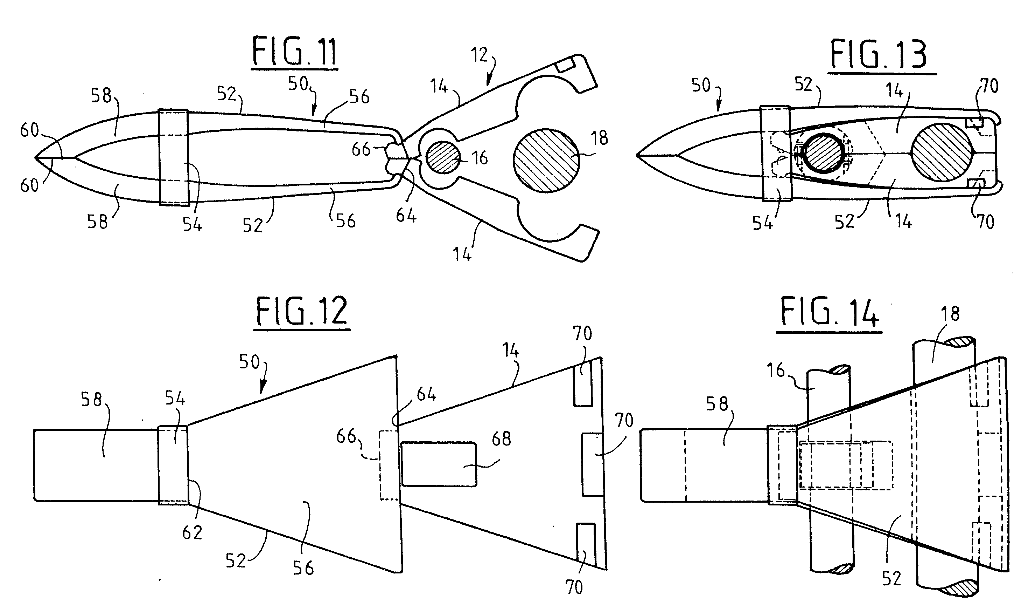

On se réfère maintenant aux figures 11 à 14 représentant une variante de réalisation de l'invention.

Dans cette variante, la pince 12 est constituée de deux mors 14 sensiblement identiques à ceux du premier mode de réalisation.

Le ressort de serrage 50 est constitué de deux branches identiques 52 reliées entre elles par une bague de frettage 54 fixée aux branches 52 par tout moyen approprié, par exemple par collage.

Chaque branche 52 du ressort comprend une partie avant 56 qui est sensiblement identique à celle des branches du ressort du mode de réalisation précédent, et une partie arrière 58 dont le rayon de courbure est beaucoup plus important que la partie correspondante du ressort du mode de réalisation précédent et qui se termine du côté tourné vers l'autre branche 52 du ressort par une face plate 60 destinée à être appliquée sur la face plate correspondante 60 de l'extrémité de l'autre branche du ressort.

Les deux bords longitudinaux de chaque branche 52 du ressort présentent chacun un épaulement 62 définissant la jonction entre les deux parties 56 et 58 de la branche et formant une face d'appui sur le bord de la bague 62 du côté des extrémités libres du ressort 50. On peut ainsi positionner exactement la bague 54 sur le ressort 50.

Les deux mors 14 de la pince 12 présentent également un épaulement 64 sur leurs faces latérales, formant une face d'appui sur le bord de la bague 54. La partie arrière 66 de chaque mors 14 est de forme rectangulaire en vue de dessus, comme représenté en figure 12.

Comme précédemment, chaque mors 14 peut comprendre un évidement 68 de réception d'une bague fendue de blocage longitudinal sur le câble porteur 16.

Les branches 52 du ressort sont réalisées de préférence en matériau composite, par exemple fibres de verre-résine époxy, de façon simple par moulage de fibres pré-imprégnées, autorisant des cadences de fabrication plus élevées et des coûts réduits.

La forme de l'extrémité arrière 58 de chaque branche, à grand rayon de courbure, apporte une garantie de faibles contraintes radiales. De plus, il devient possible, sans modification des moules, de changer l'effort de serrage développé par le ressort 50: il suffit pour cela d'usiner les faces plates 60 d'extrémité des branches 52, ou bien de placer entre elles une cale d'épaisseur appropriée, en conservant la même bague de frettage 54.

Cette bague peut être réalisée en tout matériau approprié, par exemple en carbone ou en métal.

Ce dispositif est, de façon générale, utilisé comme celui du mode de réalisation précédent. Il présente l'avantage d'éviter tout risque de délaminage des branches du ressort, par sa réalisation en deux branches appliquées l'une sur l'autre au niveau de leurs extrémités à grand rayon de courbure.

Par ailleurs, les extrémités larges des mors 14 peuvent être formées avec des encoches 70, pour permettre une ouverture plus facile du dispositif. Les extrémités opposées 66 des mors 14 peuvent aussi comprendre, sur leurs faces en regard, des saillies et/ou encoches coopérant entre elles pour éviter tout glissement latéral et faciliter la disposition des deux mors l'un sur l'autre dans la position ouverte des figures 11 et 12.

Pour fixer les idées, on précisera que les dimensions des divers composants du dispositif peuvent être les suivantes :
- longueur des branches du ressort : environ 360 mm
- longueur des mors : 235 mm
- largeur à l'extrémité libre : 240 mm
- diamètre du câble 16 : 45 mm
- diamètre du câble 18 : 70 mm.

## Revendications

1) Dispositif de liaison entre deux éléments longilignes parallèles, l'un porteur et l'autre porté, tels par exemple que des câbles sous-marins, caractérisé en ce qu'il comprend une pince (12) à deux mors de serrage (14) comprenant des moyens (20) de montage sur un premier (16) des éléments et des moyens (22) de blocage sur le second élément (18), un moyen élastique (10) mobile de serrage des mors (14) par emboîtement sur la pince (12) et des moyens (46) immobilisant les mors (14) en translation sur le premier élément (16).

2) Dispositif selon la revendication 1 ou 2, caractérisé en ce que le moyen de serrage est un ressort (10) à section en U, dont les branches (30) sensiblement parallèles s'appuient sur les mors (14) de la pince et sont déplaçables en translation sur ces mors pour les ouvrir et les fermer.

3) Dispositif selon l'une des revendications 1 ou 2, caractérisé en ce que les deux mors (14), sensiblement identiques et parallèles sont maintenus en appui l'un sur l'autre par le moyen de serrage (10) et sont déplaçables par basculement entre une position d'ouverture ou ils peuvent être engagés sur les éléments (16,18) et dégagés de ces éléments, et une position de fermeture où ils sont bloqués au moins sur le second élément (18).

4) Dispositif selon la revendication 3, caractérisé en ce que les faces en regard des deux mors (14) forment chacune un dièdre d'angle au sommet obtus.

5) Dispositif selon la revendication 6, caractérisé en ce que les faces en regard des deux mors comprennent chacune deux rainures semi-cylindriques (20, 22) dans lesquelles s'engagent les éléments (16, 18) précités.

6) Dispositif selon une des revendications 1 à 5, caractérisé en ce que les faces extérieures des mors (14) de la pince comprennent une butée ou nervure (36) dé finissant une positon du ressort (10) sur la pince (12) correspondant à l'ouverture de la pince, l'autre position étant définie par encliquetage des extrémités des branches (30) du ressort (10) sur les extrémités des mors (14) de la pince.

7) Dispositif selon l'une des revendications 2 à 6, caractérisé par une raideur relativement faible du ressort (10).

8) Dispositif selon l'une des revendications 2 à 7, caractérisé en ce que le ressort (10) est réalisé en matériau composite à fibres sensiblement uni-directionnelles.

9) Dispositif selon l'une des revendications 1 à 8, caractérisé en ce que les deux mors (14) de la pince comprennent chacun une fente (42) de logement d'une butée (446), par exemple en forme de C, montée fixement sur le premier élément (16).

10) Dispositif selon l'une des revendications précédentes, caractérisé en ce que la largeur ou dimension de la pince (12) parallèlement aux deux éléments (16,18) augmente du premier élément (16) vers le second (18).

11) Dispositif selon l'une des revendications précédentes, caractérisé en ce que le ressort en U (50) formant le moyen de serrage de la pince est constitué de deux branches (52) identiques appliquées l'une sur l'autre à une extrémité et reliées entre elles par une bague (54).

12) Dispositif selon la revendication 11, caractérisé en ce que les extrémités appliquées l'une sur l'autre des deux branches (52) sont des faces plates (60) situées dans le plan des éléments longilignes (16,18).

13) Dispositif selon la revendication 11 ou 12, caractérisé en ce que les bords longitudinaux des branches (52) du ressort comportent chaun un épaulement (62) d'appui sur le bord de la bague (54) du côté de l'extrémité libre desdites branches.

14) Dispositif selon l'une des revendications 11 à 13, caractérisé en ce que les mors (14) de serrage comprennent des épaulements latéraux (64) d'appui sur ladite bague (54).

15) Dispositif selon l'une des revendications 11 à 14, caractérisé en ce que la bague (54) est fixée aux branches (52) du ressort par collage.

FIG.1

FIG.2

FIG.3

FIG.4

FIG.5

FIG.6

FIG.7

FIG.8

FIG.9

FIG.10

FIG.11

FIG.13

FIG.12

FIG.14

EP 0 321 355 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 074 641 (WINSTON LAI) <br> * Page 1, lignes 56-60; figures 1-6 * | 1-5,7,8 | F 16 B 7/04 <br> H 02 G 9/00 <br> H 02 G 1/10 |
| A | --- | 6,11 | |
| Y | GB-A- 643 565 (MARKS & CLERK) <br> * Page 1, ligne 73 - page 2, ligne 2; figures 1-3 * | 1-5,7,8 | |
| A | --- | 11 | |
| A | US-A-2 174 624 (B.L. DONALD) <br> * Page 2, colonne de gauche, lignes 9-21; figures 1-9 * <br> --- | 2,5,11 | |
| A | FR-A- 498 976 (M.G. BODMER) <br> * Page 2, lignes 42-59; figures 1,2,4,6,10 * <br> --- | 1,9,11 | |
| A | FR-A-2 561 459 (LES CABLES DE LYON) <br> * Résumé; figures 5,6 * <br> ----- | 1,11 | |

**DOMAINES TECHNIQUES RECHERCHES (Int. Cl.4)**

F 16 B
H 02 G
F 16 L

**Le présent rapport a été établi pour toutes les revendications**

| Lieu de la recherche | Date d'achèvement de la recherche | Examinateur |
|---|---|---|
| LA HAYE | 27-01-1989 | ARESO Y SALINAS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)